# EUROPEAN PATENT APPLICATION

(11) **EP 4 624 075 A1**
(43) Date of publication of application: **01.10.2025**
(21) Application number: 24218946.2
(22) Date of filing: 11.12.2024
(51) Int. Cl.: B22F 10/47, B22F 10/64, B22F 10/14, B22F 5/00, B29C 64/165, B29C 64/40, B33Y 30/00, B33Y 40/20, B33Y 10/00

(54) **FABRICATING METHOD, FABRICATING SYSTEM, AND NON-TRANSITORY RECORDING MEDIUM**

(30) Priority: 19.12.2023 JP 2023213854
(71) Applicant: Ricoh Company, Ltd., Tokyo 143-8555 (JP)
(72) Inventor: SUGIURA, Kenji, Tokyo, 143-8555 (JP); MUTOH, Toshiyuki, Tokyo, 143-8555 (JP); SATOH, Shinichiroh, Tokyo, 143-8555 (JP); OKADA, Noriaki, Tokyo, 143-8555 (JP); TAKIMOTO, Koji, Tokyo, 143-8555 (JP)
(74) Representative: SSM Sandmair

(57) **Abstract**

A fabricating method comprising includes fabricating a fabrication object (40) in a first fabricating process (S11, 5100), fabricating multiple columns (61) above the fabrication object (40) in a lamination direction to form a sacrificial fabrication object (60) in a second fabricating process (S101), and fabricating a roof (62) above the multiple columns (61) in the lamination direction to form the sacrificial fabrication object (60) in the second fabricating process (S101).

## Description

### BACKGROUND

### Technical Field

Embodiments of the present disclosure relate to a fabricating method, a fabricating system, and a non-transitory recording medium.

### Background Art

As a fabricating method of a fabrication object without using a mold, a method that bonds a fabricating material of powder to form a fabricating layer and laminates the fabricating layers to form a fabrication object is known.

In such a fabricating method, there is a problem that deformation such as warpage occurs in the fabricating process of fabricating a fabrication object or in the following process. With respect to such a problem, in the related art (e.g., U.S. Patent Application Publication No. 2014/0335313), a method has been proposed for reducing deformation of a fabrication object by fabricating a support structure in advance under a portion of the fabrication object in which warpage occurs.

However, in the related art, such a method may not prevent deformation of a fabrication object.

### SUMMARY

An object of the present disclosure is to provide a fabricating method that can prevent deformation that occurs in the fabrication object.

According to an embodiment of the present disclosure, a fabricating method includes fabricating a fabrication object in a first fabricating process, fabricating multiple columns above the fabrication object in a lamination direction to form a sacrificial fabrication object in a second fabricating process, and fabricating a roof above the multiple columns in the lamination direction to form the sacrificial fabrication object in the second fabricating process.

According to an embodiment of the present disclosure, a fabricating system includes a fabricating apparatus to fabricate a fabrication object in a first fabricating process and fabricate a sacrificial fabrication object above the fabrication object in a second fabricating process and a dryer to dry the fabrication object and the sacrificial fabrication object.

A non-transitory recording medium storing multiple instructions which, when executed by one or more processors, causes the one or more processors to perform a method, includes causing a fabrication data generating apparatus to generate fabrication data to perform a fabricating method to fabricate the fabrication object and the sacrificial fabrication object.

According to the present disclosure, the deformation that occurs in the fabrication object can be prevented.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a fabricating system according to a first embodiment of the present disclosure;
FIG. 2 is a schematic diagram illustrating a fabricating apparatus according to the first embodiment of the present disclosure;
FIG. 3 is a diagram illustrating an operation of the fabricating apparatus according to the first embodiment of the present disclosure;
FIG. 4 is a diagram illustrating an operation of the fabricating apparatus according to the first embodiment of the present disclosure;
FIG. 5 is a diagram illustrating an operation of the fabricating apparatus according to the first embodiment of the present disclosure;
FIG. 6 is a diagram illustrating an operation of the fabricating apparatus according to the first embodiment of the present disclosure;
FIG. 7 is a diagram illustrating an operation of the fabricating apparatus according to the first embodiment of the present disclosure;
FIG. 8 is a diagram illustrating an operation of the fabricating apparatus according to the first embodiment of the present disclosure;
FIG. 9 is a flowchart of a fabricating method for a fabrication object by the fabricating system according to the first embodiment of the present disclosure;
FIGS. 10A, 10B, and 10C are diagrams illustrating a mechanism of causing deformation in a fabrication object;
FIG. 11 is a side view of a fabrication object and a sacrificial fabrication object fabricated by a fabricating method according to the first embodiment of the present disclosure;
FIG. 12 is a plan view of a fabrication object and a sacrificial fabrication object fabricated by the fabricating method according to the first embodiment of the present disclosure;
FIG. 13 is a flowchart of a fabricating method for a fabrication object by the fabricating apparatus according to the first embodiment of the present disclosure;
FIGS. 14A, 14B, and 14C are diagrams illustrating a mechanism of preventing deformation of a fabrication object;
FIG. 15 is a flowchart of a fabricating method including a removing process of a sacrificial fabrication object, according to the first embodiment of the present disclosure;
FIG. 16 is a side view of a fabrication object and a sacrificial fabrication object fabricated by a fabricating method according to a second embodiment of the present disclosure;
FIG. 17 is a plan view of a fabrication object and a sacrificial fabrication object fabricated by a fabricating method according to a third embodiment of the present disclosure;
FIG. 18 is a plan view of a fabrication object and a sacrificial fabrication object fabricated by a fabricating method according to a fourth embodiment of the present disclosure;
FIG. 19 is a side view of a fabrication object and a sacrificial fabrication object fabricated by a fabricating method according to a fifth embodiment of the present disclosure;
FIG. 20 is a side view of a fabrication object and a sacrificial fabrication object fabricated by a fabricating method according to a sixth embodiment of the present disclosure;
FIG. 21 is a side view of a fabrication object and a sacrificial fabrication object fabricated by a fabricating method according to a seventh embodiment of the present disclosure;
FIG. 22 is a side view of a fabrication object and a sacrificial fabrication object fabricated by a fabricating method according to an eighth embodiment of the present disclosure;
FIG. 23 is a side view of a fabrication object and a sacrificial fabrication object fabricated by a fabricating method according to a ninth embodiment of the present disclosure;
FIG. 24 is a side view of a fabrication object and a sacrificial fabrication object fabricated by a fabricating method according to a tenth embodiment of the present disclosure;
FIG. 25 is a side view of a fabrication object and a sacrificial fabrication object fabricated by a fabricating method according to an eleventh embodiment of the present disclosure;
FIG. 26 is a side view of a fabrication object and a sacrificial fabrication object fabricated by a fabricating method according to a twelfth embodiment of the present disclosure;
FIG. 27 is a side view of a fabrication object and a sacrificial fabrication object fabricated by a fabricating method according to a thirteenth embodiment of the present disclosure;
FIG. 28 is a flowchart of a fabricating process according to the ninth embodiment illustrated in FIG, 23;
FIG. 29 is a flowchart of a fabricating process according to the tenth embodiment illustrated in FIG, 24;
FIG. 30 is a flowchart of a fabricating process according to the eleventh embodiment illustrated in FIG, 25;
FIG. 31 is a flowchart of a fabricating process according to the twelfth embodiment illustrated in FIG, 26;
FIG. 32 is a flowchart of a fabricating process according to the thirteenth embodiment illustrated in FIG, 27;
FIG. 33 is a graph of a result of a verification test for verifying the effect of the present disclosure;
FIG. 34 is a block diagram illustrating a controller of a fabricating system and a fabrication data generation apparatus according to embodiments of the present disclosure;
FIG. 35 is a diagram illustrating an example in which multiple fabrication objects and multiple sacrificial fabrication objects are fabricated in a fabricating chamber according to an embodiment of the present disclosure;
FIG. 36A is a diagram illustrating an example in which multiple fabrication objects and multiple sacrificial fabrication objects are fabricated in a fabricating chamber according to an embodiment of the present disclosure;
FIG. 36B is a diagram illustrating an example in which multiple fabrication objects and multiple sacrificial fabrication objects are fabricated in a fabricating chamber according to an embodiment of the present disclosure; and
FIG. 36C is a diagram illustrating an example in which multiple fabrication objects and multiple sacrificial fabrication objects are fabricated in a fabricating chamber according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments will be described below with reference to the accompanying drawings. In the drawings, the same or like reference signs denote like elements having substantially the same or corresponding configurations, and descriptions thereof may be omitted.

### Configuration of Fabricating System

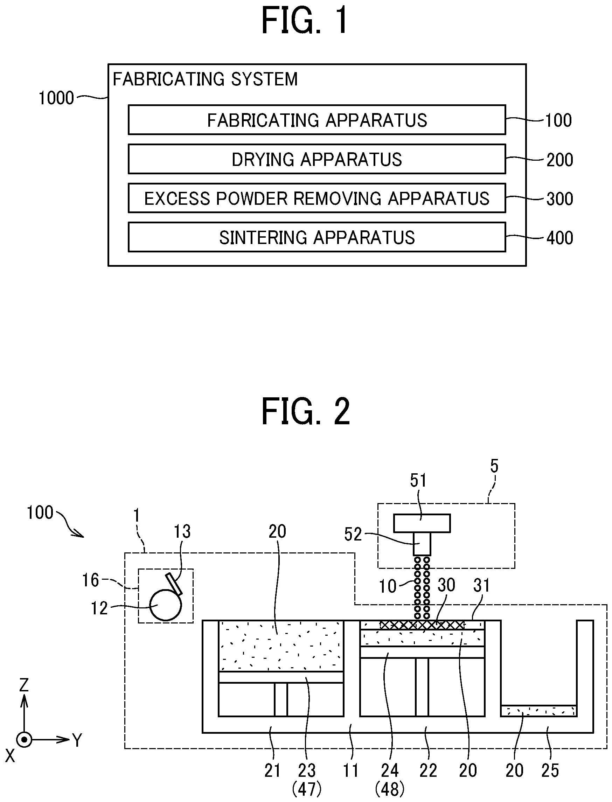

FIG. 1 is a schematic diagram illustrating a fabricating system 1000 according to a first embodiment of the present disclosure. The overall configuration of the fabricating system 1000 to which a fabricating method according to the present disclosure is applied will be described with reference to FIG. 1.

The fabricating system 1000 includes a fabricating apparatus 100, a drying apparatus 200, an excess powder removing apparatus 300, and a sintering apparatus 400.

The fabricating apparatus 100 is an apparatus that forms a powder layer containing a fabricating material and applies a fabricating liquid to the powder layer to form a fabricating layer. The fabricating apparatus 100 fabricates a three-dimensional object by laminating the fabricating layers. Examples of the fabricating material include, but not limited to, a metal powder containing aluminum, other metals, or a metal alloy, or a powder containing ceramics or glass. The fabricating liquid may include a solvent or a resin.

The drying apparatus 200 is an apparatus that performs drying processing on the fabrication object fabricated by the fabricating apparatus 100. A liquid component such as a solvent remaining in the fabrication object is evaporated and removed by the drying processing.

The excess powder removing apparatus 300 is an apparatus that removes the excess powder of the fabricating material that adheres to the fabrication object after the drying processing. As a method of removing the powder, a method that removes the powder by air blowing or a method that removes the powder by immersing the fabrication object into a removing solution can be used.

The sintering apparatus 400 is an apparatus that heats a fabrication object from which the excess powder has been removed to degrease a resin component contained in the fabrication object, and sinters the fabrication material. Since the fabrication material is sintered, a sintered body that the fabrication material is unified is obtained. The degreasing processing and the sintering processing may be performed in succession using the same apparatus or may be performed using separate apparatuses.

The fabricating system 1000 may also include a post-processing apparatus. The post-processing apparatus is not limited to any particular apparatus and can be appropriately selected according to the purpose. The post-processing apparatus is, for example, a surface protection processing apparatus that performs surface protection processing on a fabrication object after removing an excess powder, or a coating apparatus that performs a coating on a fabrication object after removing an excess powder. The fabricating apparatus 100, the drying apparatus 200, the excess powder removing apparatus 300, and the sintering apparatus 400 may be separate apparatuses, or may be partially or entirely configured to be one apparatus.

### Configuration of Fabricating Apparatus

FIG. 2 is a schematic diagram illustrating a fabricating apparatus 100 according to a first embodiment of the present disclosure. A configuration of the fabricating apparatus 100 will be described with reference to FIG. 2. The fabricating apparatus 100 is an example of an apparatus applied to, for example, a binder jetting (BJ) method.

The fabricating apparatus 100 includes a fabricating unit 1 and a fabricating liquid applying device 5.

### Fabricating Unit

The fabricating unit 1 forms a powder layer 31 containing a fabricating material 20. The fabricating unit 1 includes a powder chamber 11 and a laminating unit 16. The powder chamber 11 includes a supply chamber 21, a fabricating chamber 22, and a collection chamber 25. The supply chamber 21 is a chamber that accommodates the fabricating material 20 supplied to the fabricating chamber 22. The fabricating chamber 22 is a chamber that accommodates the powder layer 31 formed by supplying the fabricating material 20 and a fabricating layer 30 formed by bonding the fabricating material 20. The collection chamber 25 is a chamber that collects the excess fabricating material 20 overflowing from the fabricating chamber 22. The supply chamber 21, the fabricating chamber 22, and the collection chamber 25 are all formed in a box shape with an upper face opened. The bottom portion 47 of the supply chamber 21 is configured as a supply stage 23 that can move up and down in the vertical direction (Z-direction in FIG. 2). Similarly, the bottom portion 48 of the fabricating chamber 22 is configured as a fabricating stage 24 that can move up and down in the vertical direction.

The laminating unit 16 is a unit that supplies the fabricating material 20 from the supply chamber 21 to the fabricating chamber 22 to form a powder layer 31. The laminating unit 16 includes a flattening member 12 and a removing member 13.

The flattening member 12 is a member that moves in the horizontal direction (Y-direction in FIG. 2) from the supply chamber 21 to supply the fabricating material 20 to the fabricating chamber 22 and flattens the fabrication material 20 supplied from the supply chamber 21. In an example illustrated in FIG. 2, a rotating body referred to as a recoater is used as the flattening member 12. A plate-shaped blade or bar may be used as the flattening member 12.

The removing member 13 is a member that removes the fabricating material 20 that adheres to the flattening member 12. In the example illustrated in FIG. 2, a plate-shaped member in contact with the flattening member 12 to remove the fabricating material 20 is used as the removing member 13. The removing member 13 can move together with the flattening member 12 in contact with the flattening member 12.

### Fabricating Liquid Applying Device

The fabricating liquid applying device 5 is a device that applies the fabricating liquid 10 to the powder layer 31 formed in the fabricating chamber 22 to form the fabricating layer 30. The fabricating liquid applying device 5 includes a head 52 and a carriage 51.

The head 52 is a member that discharges the fabricating liquid 10 to the powder layer 31. The head 52 is, for example, an inkjet head, and includes a nozzle row in which multiple nozzles are arranged. As a fabricating liquid applying method, a dispenser method may be used in addition to an inkjet method. Further, the fabricating liquid applying device 5 may include four heads 52 that apply a cyan fabricating liquid, a magenta fabricating liquid, a yellow fabricating liquid, and a black fabricating liquid, respectively, to form a color fabrication object.

The carriage 51 is a unit that mounts the head 52 and moves the head 52 in two directions (X-direction and Y-direction in FIG. 2) orthogonal to each other on a horizontal plane and in the vertical direction (Z-direction in FIG. 2).

### Operation of Fabricating Apparatus

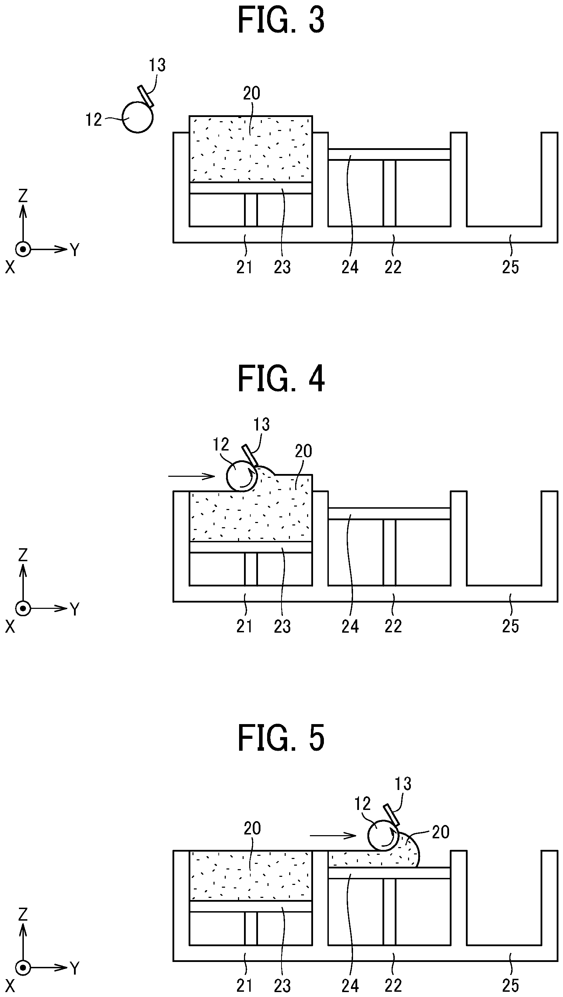

The operation of the fabricating apparatus 100 according to the first embodiment of the present disclosure will be described with reference to FIGS. 3 to 8.

When a first layer of the powder layer 31 is formed on the fabricating stage 24 of the fabricating chamber 22, as illustrated in FIG. 3, the supply stage 23 of the supply chamber 21 is moved up such that the upper surface of the fabricating material 20 is located above the upper surface of the supply chamber 21 by a predetermined thickness. On the other hand, the fabricating stage 24 of the fabricating chamber 22 is adjusted so as to be located below the upper surface of the fabricating chamber 22 by a predetermined thickness of the powder layer 31.

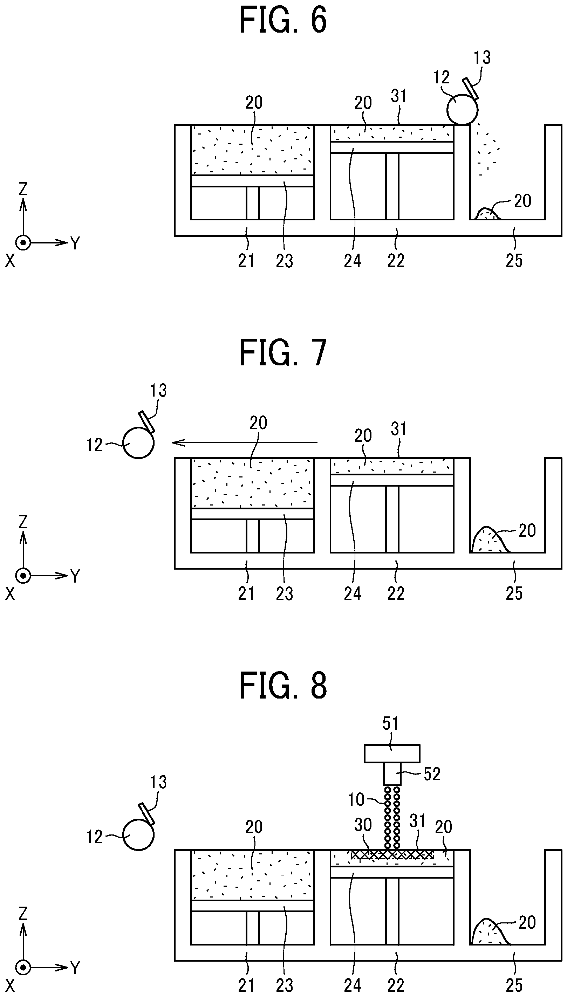

As illustrated in FIG. 4, the flattening member 12 is moved from the supply chamber 21 to the fabricating chamber 22 in the horizontal direction (i.e., Y-direction in FIG. 4), the fabricating material 20 on the supply stage 23 is pushed to the fabricating chamber 22 by the flattening member 12. When the fabricating material 20 pushed by the flattening member 12 is supplied onto the fabricating stage 24 as illustrated in FIG. 5, a first layer of the powder layer 31 having a uniform thickness is formed on the fabricating stage 24 as illustrated in FIG. 6. At this time, the excess fabricating material 20 overflowing from the fabricating chamber 22 is dropped and collected in the collection chamber 25. As illustrated in FIG. 7, since the flattening member 12 moves in the direction opposite to the moving direction, the flattening member 12 returns to the initial position.

After the powder layer 31 of the first layer was formed, as illustrated in FIG. 8, the head 52 is disposed at a position facing the powder layer 31, and the fabricating liquid 10 is discharged from the head 52 and applied to the powder layer 31. As a result, the fabricating material 20 in a portion to which the fabricating liquid 10 is applied is bonded, and the fabricating layer 30 is formed. Specifically, when the fabricating liquid 10 containing a resin is attached to the fabricating material 20, the fabricating materials 20 are bonded to each other by intermediary of the resin, and the fabricating layer 30 is formed. As the resin contained in the fabricating liquid 10, for example, polyvinyl alcohol (PVA) or polyvinyl pyrrolidone (PVP) is used. The fabricating liquid 10 is not limited to one containing such a resin described above, but may contain a crosslinking agent and an organic solvent. In the case where the fabricating liquid 10 contains a crosslinking agent and an organic solvent, the fabricating liquid 10 applied to the fabricating material 20 dissolves and crosslinks the resin covering the fabricating material 20, and the fabricating material 20 is bonded.

As described above, after the first layer of the fabricating layer 30 is formed by applying the fabricating liquid to the powder layer 31 of the first layer, the heights of the supply stage 23 and the fabricating stage 24 are adjusted again in the same manner, and the second layer of the powder layer 31 is formed on the fabricating stage 24 by reciprocating the flattening member 12. The fabricating liquid 10 is applied from the head 52 to the powder layer 31 of the second layer, and the fabricating layer 30 of the second layer is formed. The same steps are repeated to laminate multiple fabricating layers 30 and a fabrication object is formed.

The excess fabricating material 20 collected in the collection chamber 25 may be returned to the supply chamber 21. For example, the fabricating material 20 in the collection chamber 25 is transferred to a fabricating material supply device disposed at the upper part of the supply chamber 21. The fabricating material 20 stored in the fabricating material supply device may be supplied to the supply chamber 21 when the fabricating apparatus 100 starts the fabricating operation, or when the amount of the fabrication material 20 in the supply chamber 21 decreases. As a method of transferring the fabricating material 20 to the fabricating material supply device, a screw conveyor method using a screw or an air transport method using air can be used.

### Manufacturing Process of Fabricated Object

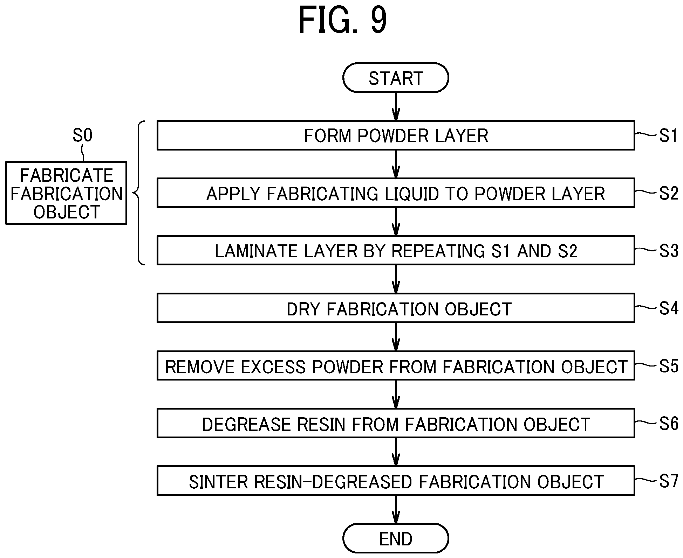

FIG. 9 is a flowchart of a fabricating process performed by the fabricating system 1000 according to a first embodiment of the present disclosure.

As illustrated in FIG. 9, the manufacturing process includes a drying process (step S4) by the drying apparatus 200, an excessive powder removing process (step S5) by the excess powder removing apparatus 300, and a degreasing process (step S6) and a sintering process (step S7) by the sintering apparatus 400 in addition to a fabricating process (step S0) by the fabricating apparatus 100.

The fabricating process (step S0) includes steps performed by the operations of the fabricating apparatus 100 illustrated in FIGS. 3 to 8. In other words, the fabricating process (step S0) includes a powder layer forming process (step S1) that forms a powder layer 31 containing a fabricating material 20, a fabricating liquid applying process (step S2) that applies a fabricating liquid to the powder layer 31, and a laminating process (step S3) that repeatedly performs the powder layer forming process (step S1) and the fabricating liquid applying process (step S2). As a result, a fabrication object is fabricated.

The drying process (step S4) that dries the fabrication object is performed after the fabricating process (step S0). In the drying process (step S4), since the fabrication object is heated by the drying apparatus 200, a liquid component such as a solvent remaining in the fabrication object is vaporized and removed. The excess powder removing process (step S5) that removes an excess powder attached to the fabrication object is performed by the excess powder removing apparatus 300. After performing the excess powder removing process (step S5), the degreasing process (step S6) is performed by the sintering apparatus 400. In the degreasing process (step S6), since the fabrication object is heated in an atmosphere containing an inert gas, the resin in the fabrication object is removed. As a result, a degreased body is formed. The sintering process (step S7) is performed by the sintering apparatus 400, and a sintered body formed by sintering the degreased body is obtained.

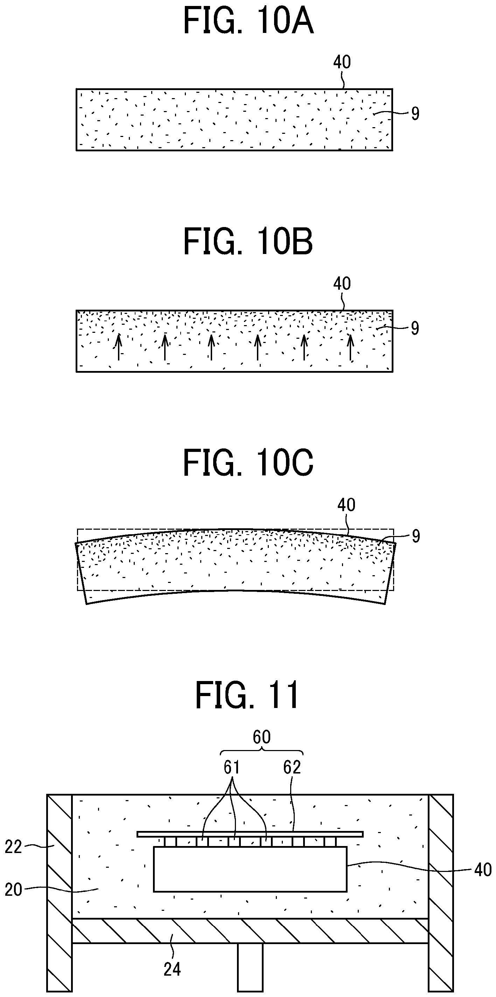

Problem of Deformation Occurred in Fabricated Object The problem of deformation occurring in the fabrication object will be described with reference to FIGS. 10A to 10C. FIGS. 10A to 10C are diagrams illustrating a mechanism of causing deformation in the fabrication object. FIG. 10A is a diagram illustrating a fabrication object 40 before the drying process. FIG. 10B is a diagram illustrating the fabrication object 40 in which resin is segregated. FIG. 10C is a diagram illustrating the fabrication object 40 deformed.

In a fabricating system using the binder jetting (BJ) method, when the drying process and the sintering process are performed on the fabrication object, the fabrication object 40 may be deformed. For example, as illustrated in FIG. 10C, there may be a case where the center of the fabrication object 40 is warped so as to protrude more upward than both ends. The reason for causing such deformation is considered to be the mechanism illustrated in FIGS. 10A and 10B.

As illustrated in FIG. 10A, in the fabrication object 40 before the drying process, the resin 9 contained in the fabricating liquid applied in the fabricating process uniformly fills over the fabrication object 40. When the drying process of the fabrication object 40 is performed in this state, the liquid component such as the solvent contained in the fabrication object 40 is vaporized. Further, as indicated by the arrows in FIG. 10B, the resin 9 in the fabrication object 40 moves from the bottom to the top of the fabrication object 40. As a result, the resin 9 is collected in the upper portion of the fabrication object 40, and resin segregation occurs in the upper portion of the fabrication object 40 in which the resin 9 increases rather than the lower portion of the fabrication object 40. When the sintering process of the fabrication object 40 is performed in a state where the resin segregation occurs, the densification of the sintering is less promoted in the upper portion in which the amount of resin 9 is larger. However, the densification of the sintering is promoted in the lower portion in which the amount of resin 9 is smaller in the sintering process. As a result, the balance of densification is lost. As described above, it is considered that the upper portion of the fabrication object 40 is warped as illustrated in FIG. 10C.

In the related art, as a method of preventing deformation of a fabrication object, there is a method of fabricating a support structure in advance under a portion of the fabrication object in which deformation occurs. However, such a method has a difficulty in preventing the deformation due to the resin segregation. Thus, the present disclosure provides a fabricating method that prevents deformation from occurring in the fabrication object as described below.

### Fabrication Method According to First Embodiment

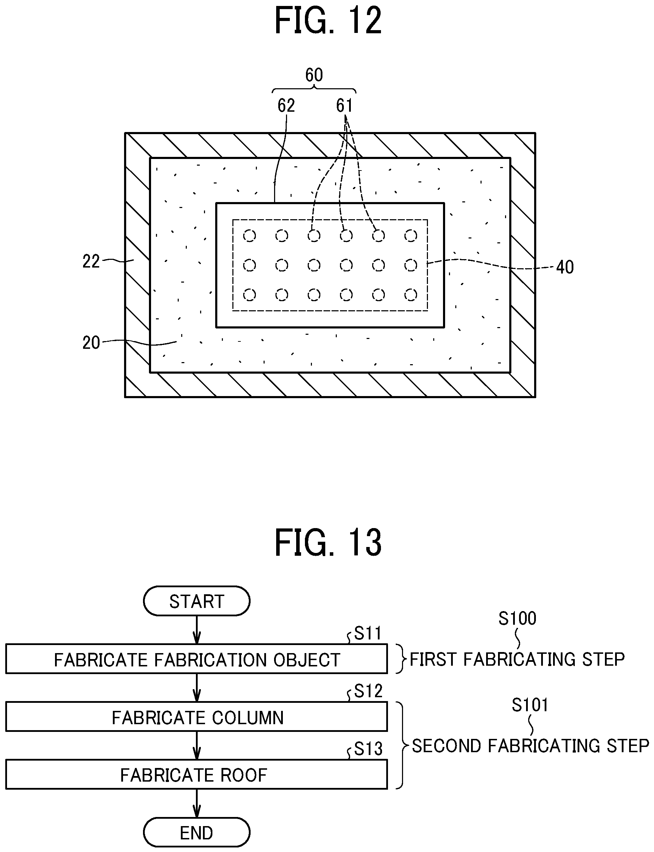

FIG. 11 is a side view of a fabrication object 40 and a sacrificial fabrication object 60 fabricated by a fabricating method according to the first embodiment of the present disclosure. FIG. 12 is a plan view of the fabrication object 40 and the sacrificial fabrication object 60 fabricated by the fabricating method according to the first embodiment of the present disclosure. The fabricating method according to the first embodiment of the present disclosure will be described with reference to FIGS. 11 and 12.

In the fabricating method according to the first embodiment of the present disclosure, a sacrificial fabrication object 60 is fabricated in addition to a fabrication object 40 that is finally obtained as a product in the fabricating chamber 22. The fabrication object 40 and the sacrificial fabrication object 60 are fabricated above the fabricating stage 24 and are buried in the fabricating material 20 in the fabricating chamber 22. Although the fabrication object 40 of the present disclosure is described as a rectangular parallelepiped, various shapes such as a cube, a polygon, a cylinder, a prism, a polygonal prism, a sphere, a shape having a recess, or a shape having a protrusion can be applied to the fabrication object 40. Unlike the fabrication object 40, the sacrificial fabrication object 60 is not a fabrication object as a product but an additional fabrication object in order to prevent deformation of the fabrication object 40. Accordingly, the sacrificial fabrication object 60 is fabricated in a state where the sacrificial fabrication object 60 is separable or separated from the fabrication object 40. The sacrificial fabrication object 60 is removed from the fabrication object 40 after the drying process. The fabricating material 20 of the sacrificial fabrication object 60 may be the same as or different from that of the fabrication object 40.

Specifically, the sacrificial fabrication object 60 includes multiple columns 61 and a roof 62 fabricated above the multiple columns 61.

The multiple columns 61 are fabricated above the fabrication object 40. The phrase "above the fabrication object 40" indicates a position at which at least a part of the multiple columns 61 is arranged so as to overlap the fabrication object 40 as viewed from the vertical direction. In the first embodiment according to the present disclosure, the multiple columns 61 are independently fabricated and spaced from each other. In other words, the multiple columns 61 are evenly arranged on the upper surface of the rectangular shape of the fabrication object 40. More specifically, the multiple columns 61 are arranged at an equal interval as a whole in the vicinity of the four sides enclosing the outer circumference of the upper surface of the fabrication object 40 and over the central portion of the upper surface. The multiple columns 61 (i.e., overall columns) are fabricated so as to connect to the upper surface of the fabrication object 40. The connection points of the multiple columns 61 may be any upper portion including the upper surface of the fabrication object 40. The phrase "upper portion" of the fabrication object 40 indicates a portion above the middle position of the overall height of the fabrication object 40. For example, when the fabrication object 40 is a sphere, the multiple columns 61 may be connected to the surface (i.e., hemispherical surface) of the portion above the center of the sphere. The heights of the multiple columns 61 illustrated in FIG. 11 are equal to each other, but may be different from each other. When the fabrication object 40 is a sphere, the height of the outer column among the multiple columns 61 is the highest and the height of the central column among the multiple columns 61 is the lowest. The multiple columns 61 are fabricated independently of each other and are spaced from each other, but at least two or more columns of the multiple columns 61 may be fabricated in contact with each other.

The roof 62 is fabricated above the multiple columns 61. The phrase "above the multiple columns" is also similar to the phrase "above the fabrication object 40". In other words, at least a portion of the roof 62 may be arranged so as to overlap the multiple columns 61 as viewed from the vertical direction. The roof 62 is connected to upper ends of the multiple columns 61. Accordingly, the roof 62 is fabricated so as to be connected to the fabrication object 40 by intermediary of the multiple columns 61.

The roof 62 according to the first embodiment of the present disclosure may be located above the fabrication object 40 so as to cover the fabrication object 40, and may not be a zenith. Although nothing is fabricated above the roof 62 illustrated in FIG. 11, a sacrificial fabrication object 60 may be further fabricated above the roof 62. In other words, any one of the multiple columns 61, the roof 62, or the multiple columns 61 and the roof 62 may be further fabricated above the roof 62 illustrated in FIG. 11.

As illustrated in FIG. 11, the multiple columns 61 have the height larger than the thickness of the roof 62. The height of the multiple columns 61 and the thickness of the roof 62 may be equal, or the thickness of the roof 62 may be larger than the height of the multiple columns 61. The thicker the thickness of the roof 62 is, the less the fabrication object 40 is deformed.

### Fabricating Process

A fabricating method of a fabrication object by the fabricating apparatus according to the first embodiment of the present disclosure will be described with reference to FIG. 13. FIG. 13 is a flowchart of a fabricating method for a fabrication object by the fabricating apparatus according to the first embodiment of the present disclosure.

The fabricating method according to the first embodiment of the present disclosure includes a first fabricating process that fabricates a fabrication object 40 (step S11 and step S100) and a second fabricating process that fabricates a sacrificial fabrication object 60 (step S12, step S13, and step S101). In a fabricating system using the BJ method, since the fabrication object is fabricated in order from the lower side for each fabricating layer, the fabricating of the fabrication object 40 disposed at the lower side is performed (first fabricating step S100). After the fabrication of the fabrication object 40 is completed, the fabricating of the sacrificial fabrication object 60 is performed (second fabricating step S101). In the fabricating of the sacrificial fabrication object 60 (second fabricating step S101), the multiple columns 61 are fabricated and the roof 62 is fabricated. As a result, a sacrificial fabrication object 60 including the multiple columns 61 above the fabrication object 40 and the roof 62 above the multiple columns 61 is fabricated.

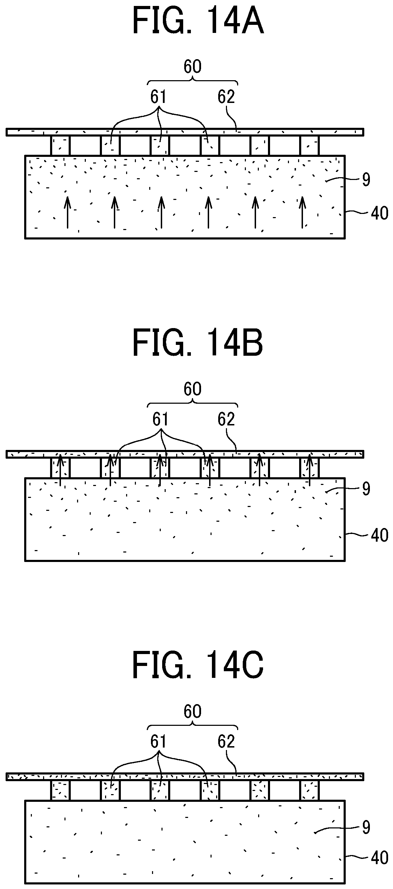

As described above, in the fabricating method according to the first embodiment of the present disclosure, since the sacrificial fabrication object 60 is fabricated above the fabrication object 40, the deformation of the fabrication object 40 due to the resin segregation can be prevented. In this case, the mechanism illustrated in FIGS. 14A to 14C is conceivable as a mechanism of preventing resin segregation that causes deformation. FIGS. 14A to 14C are diagrams illustrating a mechanism of preventing deformation of the fabrication object 40. FIG. 14A is a diagram illustrating the movement of the resin 9 in the fabrication object 40 during the drying processing, FIG. 14B is a diagram illustrating the movement of the resin 9 in the sacrificial fabrication object 60, and FIG. 14C is a diagram illustrating the state of the resin 9 in the fabrication object 40.

### Mechanism of preventing Deformation

The fabrication object 40 and the sacrificial fabrication object 60 are fabricated in the fabricating chamber 22, and the drying processing is performed while being accommodated in fabricating chamber 22 together with the fabricating material 20. At this time, as indicated by the arrows in FIG. 14A, the resin 9 moves to the top from the bottom of the fabrication object 40 in accordance with the drying processing. As a result, the resin 9 in the fabrication object 40 is collected in the sacrificial fabrication object 60 at the upper portion of the fabrication object 40. As illustrated in FIG. 14B, it is considered that the resin 9 moves to the roof 62 through the multiple columns 61. Accordingly, it is prevented that the resin segregation in which the amount of the resin 9 more increases in the upper portion than the lower portion of the fabrication object 40. As described above, it is considered that the resin 9 in the fabrication object 40 is distributed uniformly or nearly uniformly as illustrated in FIG. 14C. The mechanism of preventing the resin segregation is a presumption, and the possibility that other mechanisms are involved in the prevention of the resin segregation cannot be denied. The present embodiment is not limited to the mechanism described above.

As described above, in the fabricating method according to the first embodiment of the present disclosure, since the resin segregation can be prevented, the deformation of the fabrication object 40 in the sintering process can be prevented. In other words, since the variations in the amount of resin in the upper portion and the lower portion of the fabrication object 40 are prevented, the densification in the sintering process is uniformly promoted in the upper portion and the lower portion of the fabrication object 40, and the deformation such as warpage of the fabrication object 40 is prevented.

An example of the column 61 is a columnar column having a diameter of 4 millimeters (mm), but the column 61 is not limited to the columnar column, and may have a cross-sectional shape other than a circular shape, such as a rectangular columnar shape. The column 61 may have a length in the vertical direction larger than a width in the horizontal direction, or may have a width in the horizontal direction larger than a length in the vertical direction. The thickness (i.e., width in the horizontal direction) of the multiple columns 61 is not limited to the case where all of the multiple columns 61 are the same, and the thickness of some of the multiple columns 61 may be different from the thickness of the other multiple columns 61. Further, the multiple columns 61 may be arranged at different intervals, in addition to the case where the multiple columns 61 are arranged at an equal interval.

The roof 62 may be, for example, a flat plate having a thickness of 1 mm disposed horizontally. However, the roof 62 is not limited to a flat plate, and may have a curved shape, irregularities, or a combination thereof. The thickness of the roof 62 may be uniform or non-uniform. The roof 62 may be rectangular in shape to match the shape of the fabrication object 40. The roof 62 may have various shapes other than a rectangle, such as a square, a rhombus, a polygon, an ellipse, or a perfect circle. The interval between the roof 62 and the fabrication object 40 is set to, for example, 5 mm. However, the interval between the roof 62 and the fabrication object 40 is not limited to 5 mm, and may be changed as appropriate.

### Removing Process

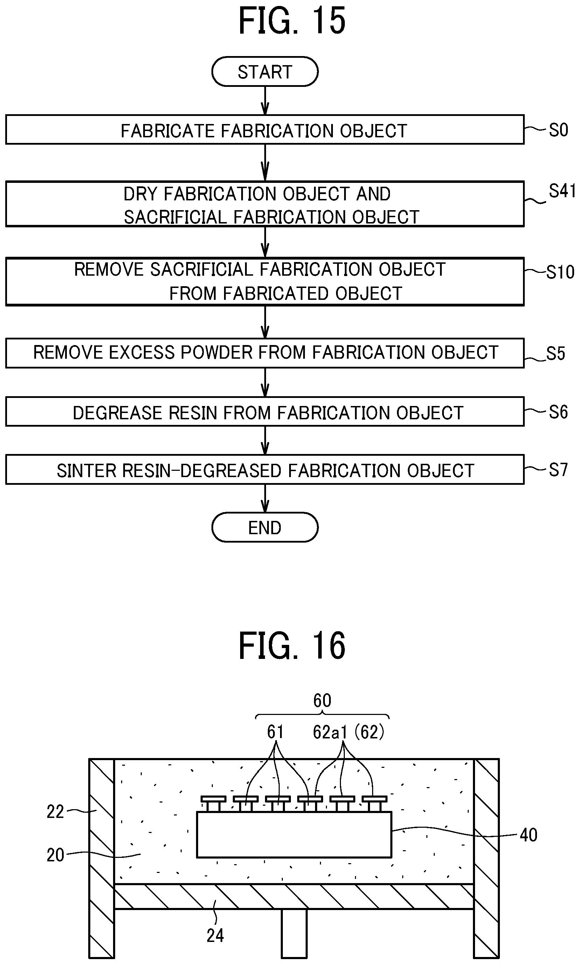

The sacrificial fabrication object 60 is removed from the fabrication object 40 after the drying process and before the degreasing process and the sintering process. FIG. 15 is a flowchart of a fabricating method including a removing process (sacrificial fabrication object removing process) according to the first embodiment of the present disclosure. In other words, after the fabricating process (step S0) of fabricating the fabrication object 40 and the sacrificial fabrication object 60 is performed, the drying process (step S41) of drying the fabrication object 40 and the sacrificial fabrication object 60 is performed. A removing process of separating and removing the sacrificial fabrication object 60 from the fabrication object 40 (sacrificial fabrication object removing process, step S10) is performed. The sacrificial fabrication object removing process (step S10) of removing the sacrificial fabrication object 60 may be performed before the excess powder removing process (step S5) of removing excess powder from the fabrication object 40, or may be performed after the excess powder removing process (step S5). The separation of the sacrificial fabrication object 60 from the fabrication object 40 may be performed manually by an operator using a tool, or may be performed automatically using an apparatus.

An embodiment different from the first embodiment of the present disclosure will be described. In the following description, the parts different from those of the first embodiment of the present disclosure will be mainly described, and the description of the same parts will be appropriately omitted.

### Second Embodiment

FIG. 16 is a side view of a fabrication object 40 and a sacrificial fabrication object 60 fabricated by a fabricating method according to a second embodiment of the present disclosure.

In the second embodiment according to the present disclosure, the roof 62 includes multiple divided roofs 62a1. The multiple divided roofs 62a1 may be connected to a single column of the multiple columns 61 or to multiple columns 61. In this case, since it is considered that the vaporized component generated from the fabrication object 40 during the drying processing is discharged upward through the gap between the multiple divided roofs 62a1, the acceleration of drying is expected. The fabrication of the multiple divided roofs 62a1 may be omitted. In other words, only the multiple columns 61 may be fabricated as the sacrificial fabrication object 60 above the fabrication object 40.

As in the first embodiment of the present disclosure, at least two or more columns of the multiple columns 61 may be fabricated in contact with each other. A sacrificial fabrication object 60 may be further fabricated above the multiple divided roofs 62a1. Further, the height of the multiple columns 61 is larger than the thickness of the multiple divided roofs 62a1, but the height is not limited to this height. The height of the multiple columns 61 may be equal to the thickness of the multiple divided roofs 62a1, or the thickness of the multiple divided roofs 62a1 may be larger than the height of the multiple columns 61. The heights of the multiple columns 61 may be different from each other.

### Third Embodiment

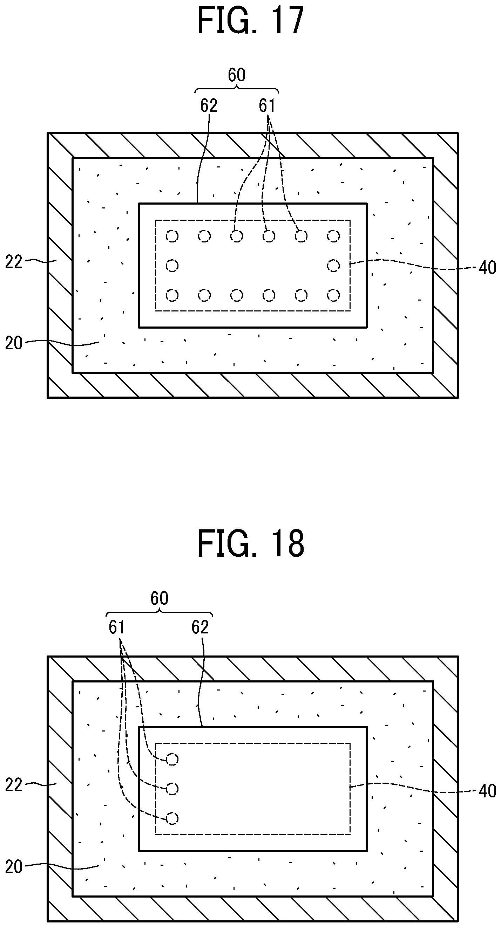

FIG. 17 is a plan view of a fabrication object 40 and a sacrificial fabrication object 60 fabricated by a fabricating method according to a third embodiment of the present disclosure.

In the third embodiment of the present disclosure, the multiple columns 61 are disposed only in the vicinity of the outer circumference of the upper surface of the fabrication object 40 except for the central portion of the upper surface. In this case, since the number of the multiple columns 61 is reduced, the work of separating the sacrificial fabrication object 60 from the fabrication object 40 is reduced, and the amount of waste can be decreased when the sacrificial fabrication object 60 is discarded.

### Fourth Embodiment

FIG. 18 is a plan view of a fabrication object 40 and a sacrificial fabrication object 60 fabricated by a fabricating method according to a fourth embodiment of the present disclosure.

As in the fourth embodiment of the present disclosure, the multiple columns 61 may be disposed only in the vicinity of one of the four sides enclosing the outer circumference of the upper surface of the fabrication object 40. In this case, since the number of the multiple columns 61 is further reduced, the separating operation of the sacrificial fabrication object 60 and the amount of waste are further reduced.

### Fifth Embodiment

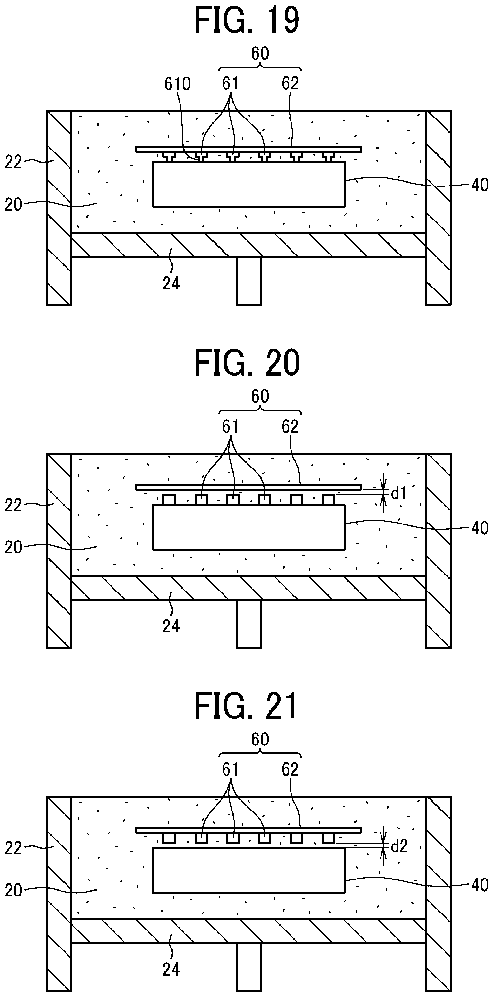

FIG. 19 is a side view of a fabrication object 40 and a sacrificial fabrication object 60 fabricated by a fabricating method according to a fifth embodiment of the present disclosure.

In the fifth embodiment of the present disclosure, each of the multiple columns 61 has recess 610. The recess 610 is disposed at the lower end of a connecting point at which each of the multiple columns 61 is connected to the fabrication object 40. Thus, the multiple columns 61 are formed such that the recess 610 has a width smaller than a width of other portions of multiple columns 61 in the horizontal direction. Accordingly, since the multiple columns 61 are easy to be separated from the fabrication object 40 from the recess 610 as a starting point, the removing operation of the sacrificial fabrication object 60 is facilitated. The recess 610 may be an annular groove disposed continuously in the circumferential direction of the column 61 having a cylindrical shape, or may be multiple grooves disposed intermittently in the circumferential direction of the column 61 having a cylindrical shape. The shape of the recess 610 can be changed as appropriate. In order to facilitate the separation of the multiple columns 61, the multiple columns 61 may be formed to be thin as a whole. For example, since the multiple columns 61 are formed in a cylindrical shape having a diameter of 2 mm, the multiple columns 61 can be easily separated.

### Sixth Embodiment

FIG. 20 is a side view of a fabrication object 40 and a sacrificial fabrication object 60 fabricated by a fabricating method according to a sixth embodiment of the present disclosure.

As in the sixth embodiment of the present disclosure, there may be a gap d1 between the multiple columns 61 and the roof 62. In other words, the multiple columns 61 and the roof 62 may not be connected to each other. In this case, the fabricating material 20 is interposed between the multiple columns 61 and the roof 62.

As described above, even when the multiple columns 61 and the roof 62 are not connected to each other, deformation due to resin segregation in the fabrication object 40 can be prevented. In this case, it is considered that the resin in the fabrication object 40 is moved to the roof 62 through the fabricating material 20 between multiple columns 61 and the roof 62 to decrease the amount of the resin at the upper portion of the fabrication object 40. The present embodiment is not limited to the mechanism described above. This point is also applied to other embodiments described below.

### Seventh Embodiment

FIG. 21 is a side view of a fabrication object 40 and a sacrificial fabrication object 60 fabricated by a fabricating method according to a seventh embodiment of the present disclosure.

In the seventh embodiment of the present disclosure, a gap d2 is disposed between the multiple columns 61 and the fabrication object 40. Thus, the multiple columns 61 are not connected to the fabrication object 40. Accordingly, the fabricating material 20 is interposed between the multiple columns 61 and the fabrication object 40.

In this case, it is considered that the resin in the fabrication object 40 is moved to the multiple columns 61 and the roof 62 through the fabricating material 20 between multiple columns 61 and the roof 62 to prevent the deformation in the fabrication object 40 due to the resin segregation. In this case, since the sacrificial fabrication object 60 including the multiple columns 61 and the roof 62 is separated from the fabrication object 40 as a whole, the separation operation of the sacrificial fabrication object 60 is not required.

### Eighth Embodiment

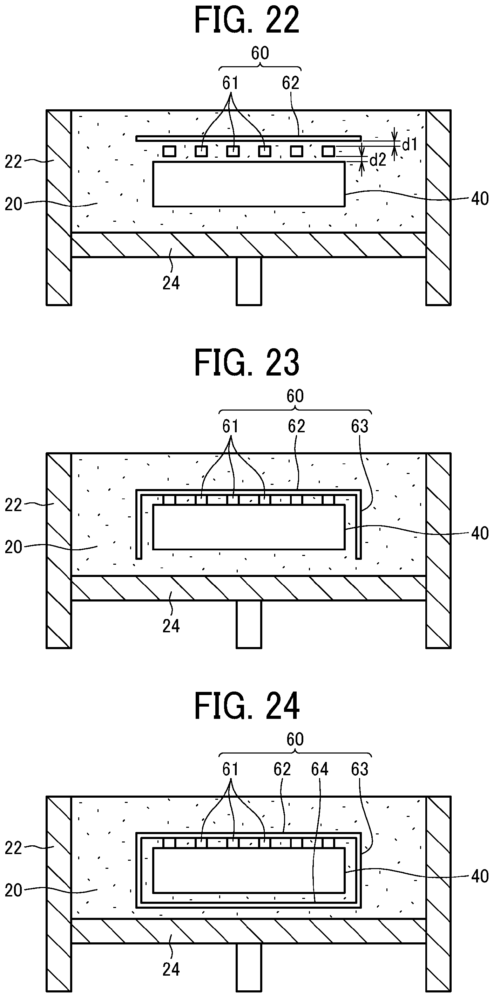

FIG. 22 is a side view of a fabrication object 40 and a sacrificial fabrication object 60 fabricated by a fabricating method according to an eighth embodiment of the present disclosure.

In the eighth embodiment of the present disclosure, a gap d1 is disposed between the multiple columns 61 and the roof 62, and a gap d2 is disposed between the multiple columns 61 and the fabrication object 40. Thus, the multiple columns 61 are not connected to the roof 62 and the fabrication object 40. Accordingly, the fabricating material 20 is disposed between the multiple columns 61 and the roof 62, and between the multiple columns 61 and the fabrication object 40.

In this case, it is considered that the resin in the fabrication object 40 is moved to the multiple columns 61 and the roof 62 through the fabricating material 20 between multiple columns 61 and the roof 62 and between the multiple columns 61 and the roof 62 to prevent the deformation in the fabrication object 40 due to the resin segregation. Also in this case, since the sacrificial fabrication object 60 is separated from the fabrication object 40 as a whole, the separation operation of the sacrificial fabrication object 60 is not required. The multiple columns 61 may be fabricated by combining any two or more of the first, and fifth to eighth embodiments of the present disclosure.

### Ninth Embodiment

FIG. 23 is a side view of a fabrication object 40 and a sacrificial fabrication object 60 fabricated by a fabricating method according to a ninth embodiment of the present disclosure.

In the ninth embodiment of the present disclosure, the sacrificial fabrication object 60 includes a side wall 63 fabricated in the vicinity of the side of the fabrication object 40 in addition to the multiple columns 61 and the roof 62. The side wall 63 may be disposed continuously over the entire circumference of the fabrication object 40 or may be disposed in a part of the circumference of the fabrication object 40 as long as at least a part of the side wall 63 is disposed to overlap the fabrication object 40 as viewed from any horizontal direction. The side wall 63 is not limited to the flat plate shape, but may have a curved shape or a shape having a protrusion and a recess.

As described above, it is considered that the sacrificial fabrication object 60 includes the side wall 63 in addition to the multiple columns 61 and the roof 62 so that the resin that has moved from the fabrication object 40 to the roof 62 through the multiple columns 61 can be further moved to the side wall 63. Accordingly, it is considered that more resin can be moved to the sacrificial fabrication object 60, the amount of resin in the upper portion of the fabrication object 40 can be decreased, and deformation due to resin segregation can be prevented.

The multiple columns 61, the roof 62, and the side wall 63 may be connected to each other and integrally formed as one body, or may be separated from each other by the intermediary of a gap. The multiple columns 61 and the fabrication object 40 may be connected to each other or separated from each other by the intermediary of a gap.

### Tenth Embodiment

FIG. 24 is a side view of a fabrication object 40 and a sacrificial fabrication object 60 fabricated by a fabricating method according to a tenth embodiment of the present disclosure.

In the tenth embodiment of the present disclosure, the sacrificial fabrication object 60 includes a floor 64 fabricated below the fabrication object 40 in addition to the multiple columns 61, the roof 62, and the side wall 63. The floor 64 may be disposed such that at least a portion of the floor 64 overlaps the fabrication object 40 as viewed from the vertical direction. The floor 64 is not limited to the flat plate shape, and may have a curved shape or a shape having a protrusion or recess.

As described above, it is considered that the sacrificial fabrication object 60 includes the floor 64 in addition to the multiple columns 61, the side wall 63, and the floor 64 so that the resin that has moved from the fabrication object 40 to the roof 62 through the multiple columns 61 can be further moved to the floor 64 through of a side wall 63. Accordingly, it is considered that more resin can be moved to the sacrificial fabrication object 60, the amount of resin in the upper portion of the fabrication object 40 can be decreased, and deformation due to resin segregation can be prevented.

The multiple columns 61, the roof 62, the side wall 63, and the floor 64 may be connected to each other and integrally formed as one unit, or may be separated from each other by the intermediary of a gap. The multiple columns 61 and the fabrication object 40 may be connected to each other or separated from each other by the intermediary of a gap.

### Eleventh Embodiment

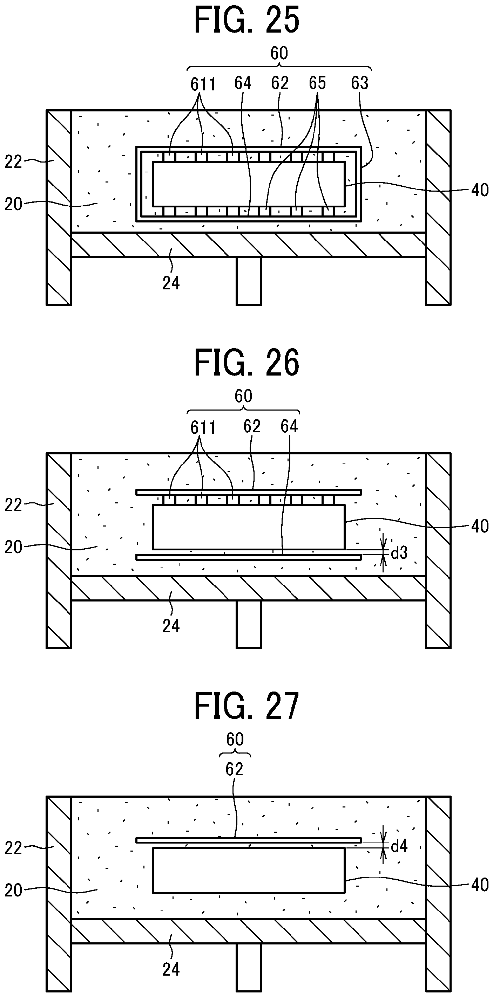

FIG. 25 is a side view of a fabrication object 40 and a sacrificial fabrication object 60 fabricated by a fabricating method according to an eleventh embodiment of the present disclosure.

In the eleventh embodiment of the present disclosure, the floor 64 and the fabrication object 40 are connected to each other by the intermediary of the second multiple columns 65. In this case, the sacrificial fabrication object 60 includes first multiple columns 611 fabricated between the roof 62 and the fabrication object 40 and second multiple columns 65 fabricated between the floor 64 and the fabrication object 40 in addition to the roof 62, the side wall 63, and the floor 64.

As described above, the floor 64 and the fabrication object 40 are connected to each other by the intermediary of the second multiple columns 65. Accordingly, when the drying processing is performed, the resin contained in the floor 64 is moved to the fabrication object 40 by the intermediary of the second multiple columns 65. As a result, it is considered that the resin is supplied to the lower portion of the fabrication object 40. On the other hand, in the upper portion of the fabrication object 40, the resin is moved to the roof 62 and the side wall 63 through the first multiple columns 611 so that the amount of the resin is decreased. In other words, the amount of resin can be decreased in the upper portion in which the amount of resin increases with drying processing, and conversely, the amount of resin can be increased in the lower portion in which the amount of resin decreases. Thus, it is considered that deformation due to resin segregation can be more effectively prevented.

The second multiple columns 65 may be arranged uniformly over the entire lower surface of the fabrication object 40 as in the multiple columns 61 illustrated in FIG. 12 (corresponding to the first multiple columns 611 in FIG. 25), or may be arranged only in the vicinity of a part of the four sides enclosing the outer circumference of the lower surface of the fabrication object 40 as in the multiple columns 61 as illustrated in FIGS. 17 and 18 (corresponding to the first multiple columns 611 in FIG. 25). In addition, as in the case of the first multiple columns 611, each of the second multiple columns 65 may have a recess at a connecting point of the second multiple columns 65 to the fabrication object 40 in order to facilitate the separation operation from the fabrication object 40.

In FIG. 25, the first multiple columns 611, the roof 62, the side wall 63, the floor 64, and the second multiple columns 65 are connected to each other and are integrally formed as one body, but may be separated by the intermediary of a gap. The first multiple columns 611 and the fabrication object 40 may be connected to each other or separated from each other by the intermediary of a gap, and the second multiple columns 65 and the fabrication object 40 may be connected to each other or separated from each other by the intermediary of a gap.

### Twelfth Embodiment

FIG. 26 is a side view of a fabrication object 40 and a sacrificial fabrication object 60 fabricated by a fabricating method according to a twelfth embodiment of the present disclosure.

In the twelfth embodiment of the present disclosure, the sacrificial fabrication object 60 does not include a side wall 63 and second multiple columns 65, but include only first multiple columns 611, a roof 62, and a floor 64.

Since the floor 64 is not connected to the fabrication object 40, a gap d3 is disposed between the floor 64 and the fabrication object 40. The fabricating material 20 is disposed in the gap d3.

In this case, it is considered that the performing the drying processing causes the resin contained in the floor 64 to move to the fabrication object 40 through the fabricating material 20 between the floor 64 and the fabrication object 40. Accordingly, the resin is supplied to the lower portion of the fabrication object 40. On the other hand, in the upper portion of the fabrication object 40, the resin is moved to the roof 62 through the first multiple columns 611, so that the amount of the resin is decreased. As a result, variations in the amount of resin between the upper portion and the lower portion of the fabrication object 40 are prevented. Thus, it is considered that deformation due to resin segregation can be effectively prevented in this case as well.

In the fifth to twelfth embodiments, as in the first embodiment of the present disclosure, at least two or more of the multiple columns 61 (including the first multiple columns 611) may be fabricated in contact with each other. A sacrificial fabrication object 60 may be further fabricated above the roof 62. Further, the height of the multiple columns 61 (including the first multiple columns 611) is larger than the thickness of the roof 62, but the height is not limited to this. The height of the multiple columns 61 (including the first multiple columns 611) may be equal to the thickness of the roof 62, or the thickness of the roof 62 may be larger than the height of the multiple columns 61 (including the first multiple columns 611). The heights of the multiple columns 61 may be different from each other.

### Thirteenth Embodiment

FIG. 27 is a side view of a fabrication object 40 and a sacrificial fabrication object 60 fabricated by a fabricating method according to a thirteenth embodiment of the present disclosure.

In the thirteenth embodiment of the present disclosure, the sacrificial fabrication object 60 includes only the roof 62. The roof 62 is disposed above the fabrication object 40. In other words, the roof 62 is disposed such that at least a portion of the roof 62 overlaps the fabrication object 40 as viewed from the vertical direction.

Since the roof 62 is not connected to the fabrication object 40, there is a gap d4 between the roof 62 and the fabrication object 40. The fabricating material 20 is filled in the gap d4.

In this case, it is considered that performing the drying processing causes the resin contained in the fabrication object 40 to move to the roof 62 through the fabricating material 20 between the roof 62 and the fabrication object 40. Accordingly, it is considered that the amount of resin that collects in the upper portion of the fabrication object 40 can be decreased and deformation due to resin segregation can be prevented.

The size of each of the gaps d1, d2, d3, and d4 in FIGS. 20, 21, 22, 23, 26, and 27 can be changed as appropriate, but is preferably 10 mm or less, and is preferably about 20 mm at the maximum.

### Other Embodiments of the Present Disclosure

A fabricating process according to an embodiment other than the first embodiment of the present disclosure will be described.

In each embodiment of FIGS. 16 to 22, as in the first embodiment, since the sacrificial fabrication object 60 includes the multiple columns 61 (including the first multiple columns 611) and the roof 62 disposed above the fabrication object 40, the fabricating process is basically the same as that in the first embodiment of the present disclosure. In other words, as illustrated in FIG. 13, the fabricating of the fabrication object 40 is performed, the fabricating of the multiple columns 61 (including the first multiple columns 611) is performed, and the fabricating of the roof 62 is performed.

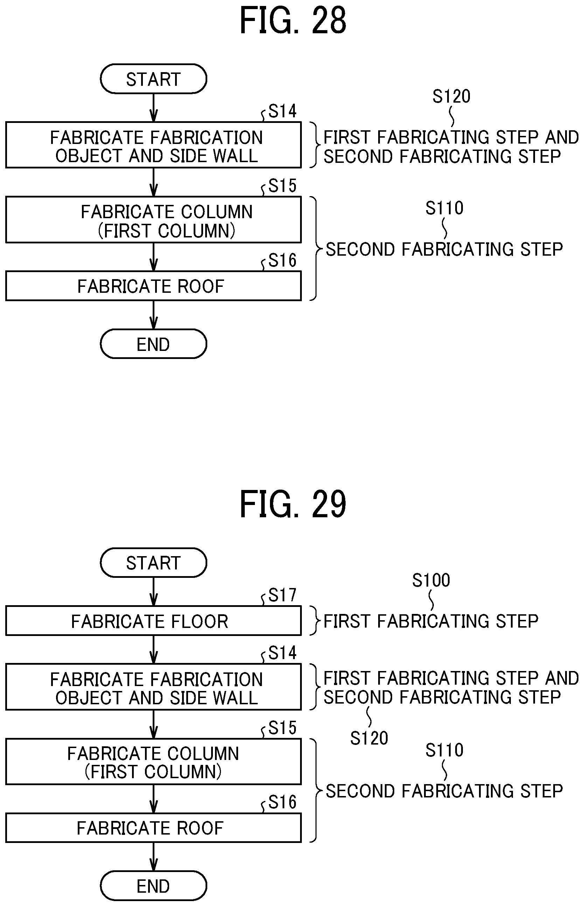

FIG. 28 is a flowchart of a fabricating process according to the ninth embodiment illustrated in FIG. 23. As in the ninth embodiment of FIG. 23, when the sacrificial fabrication object 60 includes the side wall 63, the side wall 63 is disposed in the vicinity of the side of the fabrication object 40. Accordingly, as illustrated in FIG. 28, the side wall 63 is also fabricated when the fabrication object 40 is fabricated. In other words, in terms of portions having the same height of the fabrication object 40 and the side wall 63, the fabricating liquid 10 is applied to the same powder layer 31 at the same height of the fabrication object 40 and the side wall 63. Accordingly, a fabricating layer 30 of the fabrication object 40 and a fabricating layer 30 of the side wall 63 are fabricated. The fabricating layer 30 of the fabrication object 40 and the fabricating layer 30 of the side wall 63 are laminated, and the fabrication object 40 and the side wall 63 are fabricated. When a portion of the side wall 63 is located at a position lower than the fabrication object 40, the portion located at a position lower than the fabrication object 40 is first fabricated, and the other portions of the side wall 63 and the fabrication object 40 are fabricated. By contrast, when a portion of the fabrication object 40 is located at a position lower than the side wall 63, the portion located at a position lower of the fabrication object 40 is first fabricated, and the other portions of the fabrication object 40 and the side wall 63 are fabricated.

After the fabricating of the fabrication object 40 and the side wall 63 is completed, the fabricating of the multiple columns 61 (including the first multiple columns 611) is performed, and the fabricating of the roof 62 is performed. When a portion of the side wall 63 is located at the same height as the multiple columns 61, the side wall 63 is fabricated together with the multiple columns 61. As described above, the sacrificial fabrication object 60 including the side wall 63 is fabricated.

FIG. 29 is a flowchart of a fabricating process according to the tenth embodiment illustrated in FIG, 24. As in the embodiment of FIG. 24, when the sacrificial fabrication object 60 includes the floor 64, as illustrated in FIG. 29, the fabricating of the floor 64 is performed. After the fabricating of the floor 64 is completed, the fabricating of the fabrication object 40 and the side wall 63, the fabricating of the multiple columns 61 (including the first multiple columns 611), and the fabricating of the roof 62 are sequentially performed. Since the fabricating of the members other than the floor 64 is the same as the fabricating of the embodiment in FIG. 23, a detailed description thereof will be omitted.

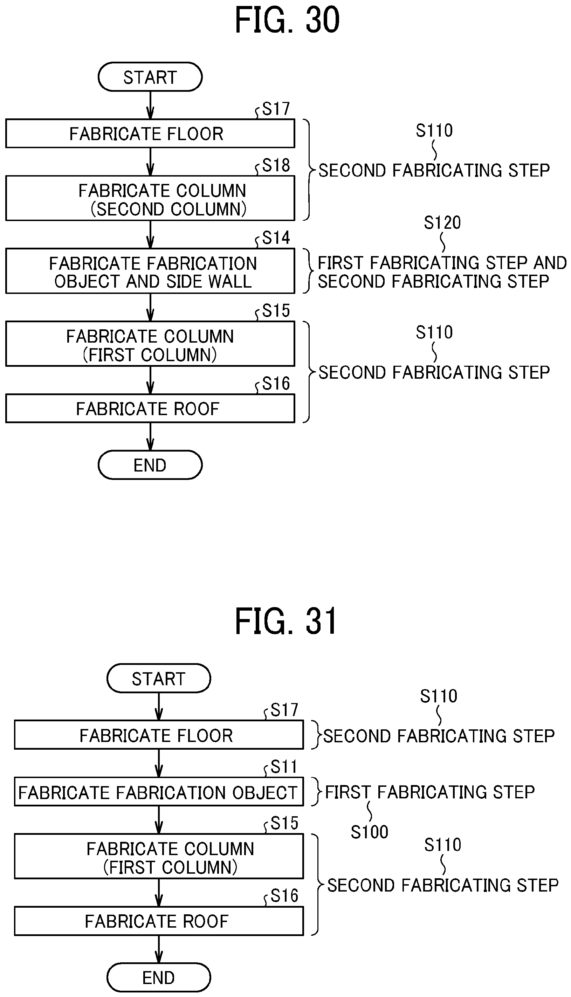

FIG. 30 is a flowchart of a fabricating process according to the eleventh embodiment illustrated in FIG, 25. As in the embodiment of FIG. 25, when the sacrificial fabrication object 60 includes the multiple columns 61 (including the second multiple columns 65) between the sacrificial fabrication object 60 and the floor 64, as illustrated in FIG. 30, the fabricating of the multiple columns 61 (including the second multiple columns 65) is performed after the fabricating of the floor 64 is completed. When a portion of the side wall 63 is located at the same height as the multiple columns 61 (including the second multiple columns 65), the fabricating of the side wall 63 is performed together with the fabricating of the multiple columns 61 (including the second multiple columns 65). After the fabricating of the multiple columns 61 (including the second multiple columns 65) is completed, the fabricating of the fabrication object 40 and the side wall 63, the fabricating of the multiple columns 61 (including the first multiple columns 611), and the fabricating of the roof 62 are sequentially performed.

FIG. 31 is a flowchart of a fabricating process according to the twelfth embodiment illustrated in FIG, 26. As in the embodiment of FIG. 26, when the sacrificial fabrication object 60 includes only the roof 62, the multiple columns 61 (including the first multiple columns 611), and the floor 64, as illustrated in FIG. 31, the fabricating of the fabrication object 40, the fabricating of the multiple columns 61 (including the first multiple columns 611), and the fabricating of the roof 62 are sequentially performed after the fabricating of the floor 64 is performed.

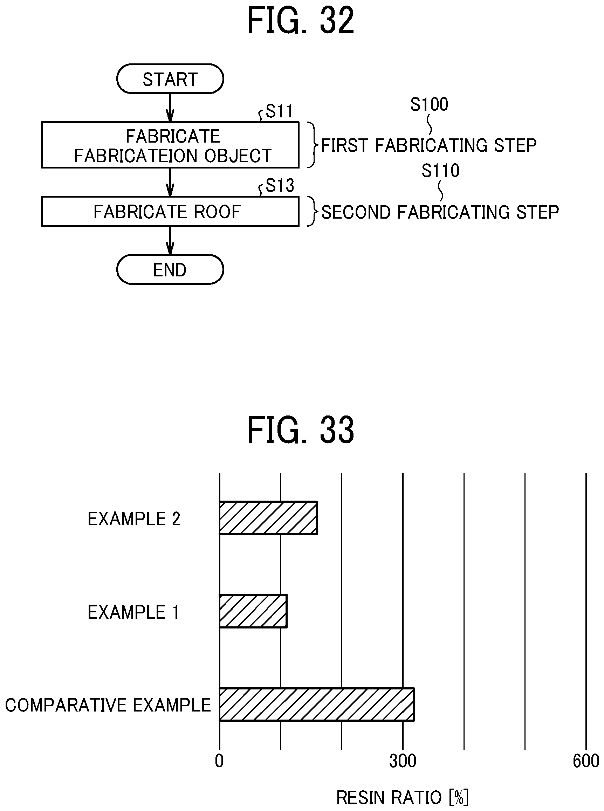

FIG. 32 is a flowchart of a fabricating process according to the embodiment illustrated in FIG, 27. As in the embodiment of FIG. 27, when the sacrificial fabrication object 60 includes only the roof 62, the fabricating of the roof 62 is performed after the fabricating of the fabrication object 40 is performed.

As described above, the fabricating process according to each embodiment of the present disclosure is performed.

### <Verification test>

A verification test for verifying the effect of the present disclosure will be described. FIG. 33 is a graph of a result of the verification test for verifying the effect of the present disclosure.

In the verification test, the drying processing is performed to the fabrication object 40 fabricated together with the sacrificial fabrication object 60 and the fabrication object 40 not fabricated together with the sacrificial fabrication object 60 after fabrication, and the ratio of the resin in the upper portion to the lower portion of each fabrication object 40 after the drying processing was calculated. The ratio of the resin can be quantitatively calculated by, for example, thermal analysis.

In FIG. 33, EXAMPLE 1 is an example in which the sacrificial fabrication object 60 illustrated in FIG. 11 includes multiple columns 61 (including the first multiple columns 611) and a roof 62, and EXAMPLE 2 is an example in which the sacrificial fabrication object 60 illustrated in FIG. 27 includes only the roof 62. On the other hand, COMPARATIVE EXAMPLE is an example in which the sacrificial fabrication object 60 is not fabricated, and only the fabrication object 40 is fabricated.

As illustrated in FIG. 33, in COMPARATIVE EXAMPLE, the ratio of the resin in the upper portion to the lower portion of the fabrication object 40 exceeded 300%, and the resin segregation remarkably occurred. By contrast, in EXAMPLES 1 and 2 according to the present disclosure, the ratio of the resin in the upper portion to the lower portion of the fabrication object 40 was less than 200%, and the resin segregation was prevented. In particular, in Example 1 of the present disclosure, the resin segregation was more effectively prevented.

As described above, when the fabrication object 40 and the sacrificial fabrication object 60 are fabricated in the fabricating process as in EXAMPLES 1 and 2, according to each embodiment of the present disclosure, the resin segregation of the fabrication object 40 after drying can be prevented as compared with COMPARATIVE EXAMPLE in which the sacrificial fabrication object 60 is not fabricated. In particular, in Example 1 according to the present disclosure, since the resin segregation is effectively prevented, it is preferable that the roof 62 is connected to the fabrication object 40 by the intermediary of the multiple columns 61 in order to prevent the resin segregation. This is presumably because the resin in the fabrication object 40 is likely to move to the roof 62 through the multiple columns 61.

Configuration of Controller and Fabricating Data Generation Apparatus

The configuration of the controller of the fabricating system and the fabrication data generation apparatus according to each embodiment of the present disclosure will be described.

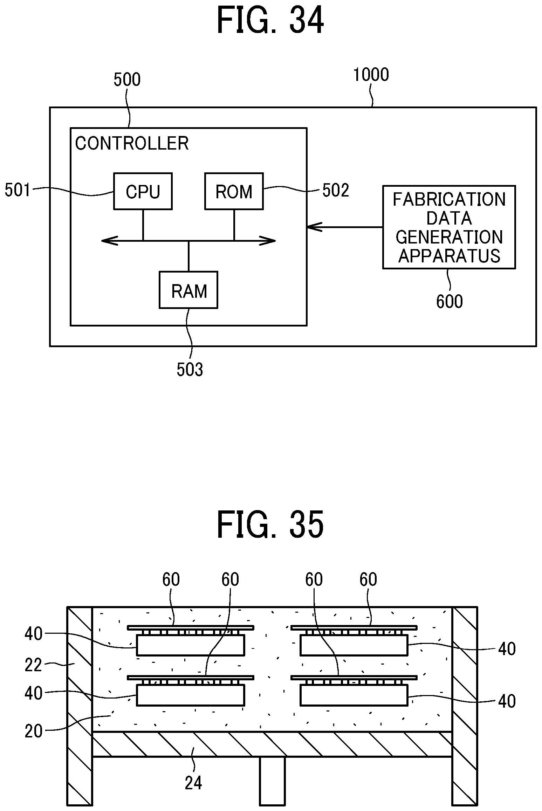

FIG. 34 is a block diagram illustrating a controller 500 of the fabricating system 1000 and a fabrication data generation apparatus 600 according to each embodiment of the present disclosure.

As illustrated in FIG. 34, the fabricating system 1000 includes a controller 500 and a fabrication data generation apparatus 600.

The controller 500 includes a central processing unit (CPU) 501, a read-only memory (ROM) 502, and a random-access memory (RAM) 503. The ROM 502 stores a program for causing the fabrication data generation apparatus 600 to perform processing for generating fabrication data for fabricating the fabrication object 40 and the sacrificial fabrication object 60, and other fixed data. The RAM 503 has a function of temporarily storing fabrication data.

The fabrication data generation apparatus 600 is, for example, a computer, and generates fabrication data obtained by slicing the fabrication object 40 and the sacrificial fabrication object 60 for each fabrication layer 30. The controller 500 receives the fabrication data from the fabrication data generation apparatus 600 and controls the fabrication operation for each fabrication layer 30 based on the fabrication data. The fabrication data generation apparatus 600 may be separate from the fabricating apparatus 100, or may be integrated with the fabricating apparatus 100 as one body. The controller 500 may be disposed inside the fabricating apparatus 100 or outside the fabricating apparatus 100.

In the embodiments described above, the fabricating method, the fabricating system, and the program to execute the fabricating method according to the present disclosure have been described, but the present disclosure is not limited to the embodiments described above. An embodiment of the present disclosure may be modified without departing from the scope or spirit of the disclosure and may be determined appropriately in accordance with applications.

In an embodiment described above, in a case where a fabrication object 40 and a sacrificial fabrication object 60 disposed around the fabrication object are fabricated in a fabricating chamber 22 has been described, but a first fabricating process of fabricating the fabrication object 40 and a second fabricating process of fabricating the sacrificial fabrication object 60 may be performed multiple times. FIG. 35 is a diagram illustrating multiple fabrication objects 40 and multiple sacrificial fabrication objects 60 fabricated in a fabricating chamber 22 according to an embodiment of the present disclosure. As in the example illustrated in FIG. 35, multiple fabrication objects 40 and multiple sacrificial fabrication objects 60 may be fabricated in the fabricating chamber 22 by performing the first fabricating process and the second fabricating process multiple times. In FIG. 35, an example in which four sacrificial fabrication objects 60 corresponding to the fabrication objects 40 are fabricated is illustrated, but the number of the sacrificial fabrication objects 60 to be fabricated can be changed as appropriate. The fabrication object 40 may have the same shape, or one or more of the fabrication objects 40 may have different shapes.

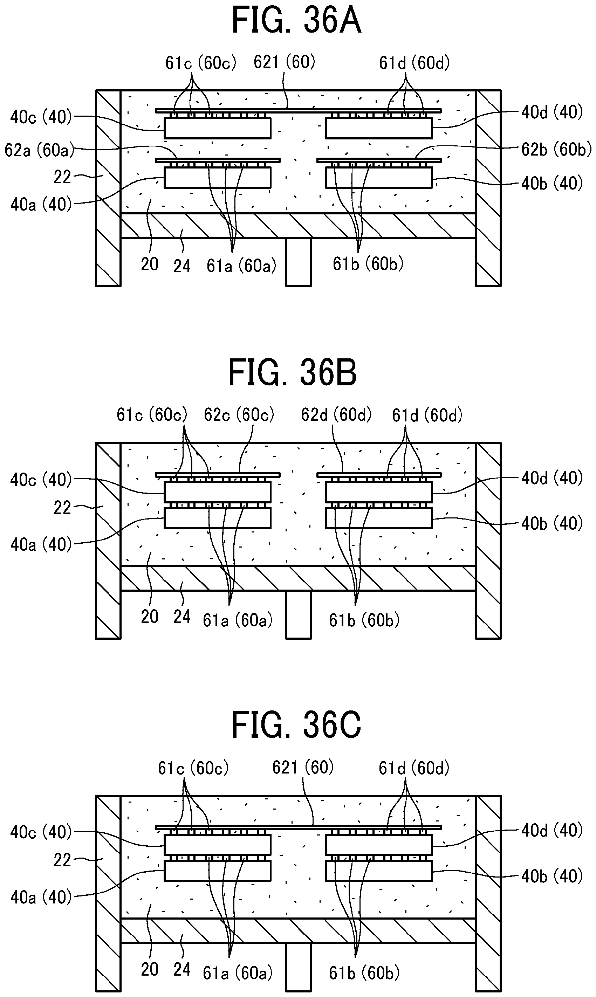

FIGS. 36A to 36C are diagrams illustrating multiple fabrication objects 40 and multiple sacrificial fabrication objects 60 fabricated in a fabricating chamber 22 according to an embodiment of the present disclosure. The description will be given of the portions different from those in FIG. 35, and the description of the same portions will be appropriately omitted. FIG. 36A is a diagram illustrating the roof 62a, the roof 62b, and the connecting roof 621. FIG. 36B is a diagram illustrating the roof 62c and the roof 62d, but the roof 62a, the roof 62b, and the connecting roof 621 have not been fabricated as in the FIG. 36A. FIG. 36C is a diagram illustrating the connecting roof 621, but the roofs 62a to 62d has not been fabricated as in the FIGS. 36A and 36B. For the sake of simplicity, a case where the four fabrication objects 40a, 40b, 40c, and 40d are fabricated as the fabrication object 40 will be described. The number and shape of the fabrication objects to be fabricated can be changed as appropriate in the same manner as in FIG. 35.

In FIG. 36A, a fabrication object 40b is fabricated in the horizontal direction of the fabrication object 40a. A sacrificial fabrication object 60a is fabricated above the fabrication object 40a, and a sacrificial fabrication object 60b is fabricated above the fabrication object 40b. Specifically, multiple columns 61a are fabricated above the fabrication object 40a, and the roof 62a is fabricated above the multiple columns 61a. Further, as in the case of the fabrication object 40a, multiple columns 61b are fabricated above the fabrication object 40b, and a roof 62b is fabricated above the multiple columns 61b. A fabrication object 40c is fabricated above the sacrificial fabrication object 60a corresponding to the fabrication object 40a, and the fabrication object 40d is fabricated above the sacrificial fabrication object 60b corresponding to the fabrication object 40b. As in the fabrication object 40a and the fabrication object 40b, multiple columns 61c are fabricated above the fabrication object 40c, multiple columns 61d are fabricated above the fabrication object 40d, and a connecting roof 621 is fabricated above the multiple columns 61c and the multiple column 61d. Unlike the roof 62a of the fabrication object 40a and the roof 62b of the fabrication object 40b, the connecting roof 62b1 is a common member by the intermediary of the multiple columns 61c and the multiple columns 61d.

In FIG. 36B, multiple columns 61a are fabricated above the fabrication object 40a and the multiple columns 61b are fabricated above fabrication object 40b, but, unlike FIG. 36A, the roof 62a is not fabricated above the multiple columns 61a and the roof 62b is not fabricated above the multiple columns 61b. In other words, the fabrication object 40c is fabricated above the multiple columns 61a, and the fabrication object 40d is fabricated above the multiple columns 61b. Further, multiple columns 61c are fabricated above the fabrication object 40c and the multiple columns 61d are fabrication object 40d, a roof 62c is fabricated above the multiple columns 61c, and a roof 62d is fabricated above the multiple columns 61d. In FIG. 36B, unlike FIG. 36A, the connecting roof 621 is not fabricated above the multiple columns 61c of the fabrication object 40c and the multiple columns 61d of the fabrication object 40d.

In FIG. 36C, multiple columns 61a are fabricated above the fabrication object 40a and multiple columns 61b is fabricated above the fabrication object 40b, but, unlike FIG. 36A, the roof 62a is not fabricated above the multiple columns 61a and the roof 62b is not fabricated above the multiple columns 61b. In other words, the fabrication object 40c is fabricated above the multiple columns 61a, and the fabrication object 40d is fabricated above the multiple columns 61b. In FIG. 36C, unlike FIG. 36B, multiple columns 61c are fabricated above the fabrication object 40c and the multiple columns 61d are fabricated above the fabrication object 40d, and a connecting roof 621 is fabricated above the multiple columns 61c and the multiple columns 61d.

The fabricating method according to the present disclosure may not include the drying process, the excess powder removing process, the sacrificial fabrication object removing process (removing process), the degreasing process, and the sintering process, or may include one or more of these processes, as long as the fabricating process is included.

In the embodiments described above, the case where the fabricating method according to the present disclosure is applied to the fabricating system of the BJ method has been described as an example, but the description does not limit the application of the present disclosure to other methods. Accordingly, the present disclosure may be applied to a fabricating system of a system other than the BJ method as long as the deformation of the fabrication object can be prevented by using the present disclosure.

As described above, aspects of the present disclosure are, for example, as follows.

### First Aspect

A fabricating method includes a first fabricating process to fabricate a fabrication object and a second fabricating process to fabricate a sacrificial fabrication object above the fabrication object. The sacrificial fabrication object includes multiple columns and a roof fabricated above the column.

### Second Aspect

In the fabricating method according to the first aspect, the roof is fabricated after fabricating the column.

### Third Aspect

In the fabricating method according to the first or second aspect, the roof is connected to at least one column of the column.

### Fourth Aspect

In the fabricating method according to first or second aspect, the roof is connected to overall the column.

### Fifth Aspect

In the fabricating method according to any one of the first to fourth aspects, the column has a recess.

### Sixth Aspect

In the fabricating method according to any one of the first to fifth aspects, the sacrificial fabrication object includes a side wall fabricated in the vicinity of a side of the fabrication object.

### Seventh Aspect

In the fabricating method according to any one of the first to sixth aspects, the sacrificial fabrication object includes a floor fabricated below the fabrication object.

### Eighth Aspect

In the fabricating method according to the seventh aspect, the sacrificial fabrication object includes multiple columns fabricated between the floor and the fabrication object.

### Ninth Aspect

In the fabricating method according to any one of the first to eighth aspects, the first fabricating process and the second fabricating process are performed multiple times to fabricate multiple fabrication objects and multiple sacrificial fabrication object.

### Tenth Aspect

The fabricating method according to any one of the first to tenth aspects further includes forming a powder layer containing a fabricating material and applying a fabricating liquid to the powder layer.

Eleventh Aspect In the fabricating method according to the tenth aspect, the fabricating liquid contains resin.

### Twelfth Aspect

The fabricating method according to any one of the first to eleventh aspects further includes drying the fabrication object and the sacrificial fabrication object.

### Thirteenth Aspect

The fabricating method according to the twelfth aspect further includes removing the sacrificial fabrication object following the drying.

### Fourteenth Aspect

The fabricating method according to the thirteenth aspect further includes sintering the fabrication object following the removing.

### Fifteenth Aspect

A fabricating method includes forming a layer to form a powder layer containing a fabricating material, applying a fabricating liquid to the powder layer, a first fabricating process to fabricate a fabrication object, and a second-fabricating process to fabricate a sacrificial fabrication object fabricated above the fabrication object.

### Sixteenth Aspect

A fabricating system fabricates a fabrication object and a sacrificial fabrication object that are dried after fabricating the fabrication object and the sacrificial fabrication object, and includes a first fabricating process to fabricate the fabrication object and a second fabricating process to fabricate the sacrificial fabrication object fabricated above the fabrication object. The sacrificial object includes multiple columns and a roof fabricated above the column.

### Seventeenth Aspect

A program causes a fabrication data generating apparatus to process generation of fabrication data when the fabricating method according to any one of the first to fifteenth aspects fabricates the fabrication object and the sacrificial fabrication object.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The functionality of the elements disclosed herein may be implemented using circuitry or processing circuitry which includes general purpose processors, special purpose processors, integrated circuits, ASICs ("Application Specific Integrated Circuits"), FPGAs ("Field-Programmable Gate Arrays"), and/or combinations thereof which are configured or programmed, using one or more programs stored in one or more memories, to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality.

## Claims

1. A fabricating method comprising:
fabricating a fabrication object (40) in a first fabricating process (S 11, S100);
fabricating multiple columns (61) above the fabrication object (40) in a lamination direction to form a sacrificial fabrication object (60) in a second fabricating process (S101); and
fabricating a roof (62) above the multiple columns (61) in the lamination direction to form the sacrificial fabrication object (60) in the second fabricating process (S101).

2. The fabricating method according to claim 1,
wherein the fabricating a roof (62) fabricates the roof (62) connected to at least one column of the multiple columns (61).

3. The fabricating method according to claim 1,
wherein the fabricating a roof (62) fabricates the roof (62) connected to all the multiple columns (61).

4. The fabricating method according to claim 1,
wherein the fabricating multiple columns (61) forms a recess (61a) in each of the multiple columns (61).

5. The fabricating method according to claim1, further comprising:
fabricating a side wall (40) on a side of the fabrication object to form the sacrificial fabrication object (60) in the second fabricating process (S101).

6. The fabricating method according to claim 1, further comprising:
fabricating a floor (64) below the fabrication object (40) in the lamination direction to form the sacrificial fabrication object (60) in the second fabricating process (S101).

7. The fabricating method according to claim 6, further comprising:
fabricating other multiple columns (61) between the floor (64) and the fabrication object (40) in the lamination direction to form the sacrificial fabrication object (60) in the second fabricating process (S101).

8. The fabricating method according to claim 1,
wherein the first fabricating process (S100) and the second fabricating process (S101) are performed multiple times to:
fabricate multiple fabrication objects including the fabrication object; and
fabricate multiple sacrificial fabrication objects including the sacrificial fabrication object.

9. The fabricating method according to claim 1, further comprising:
forming a powder layer containing a fabricating material (S1); and
applying a fabricating liquid to the powder layer (S2).

10. The fabricating method according to claim 9,
wherein the applying a fabricating liquid applies the fabricating liquid (10) containing resin to the powder layer (S2).

11. The fabricating method according to claim 1, further comprising:
drying the fabrication object and the sacrificial fabrication object (S4); and
removing the sacrificial fabrication object (S5) from the fabrication object after the drying (S4).

12. The fabricating method according to claim 11, further comprising:
sintering the fabrication object (S7) after the removing (S5).

13. The fabricating method according to claim 1,
wherein each of the first fabricating process and the second fabrication process includes:
forming a powder layer containing a fabricating material; and
applying a fabricating liquid to the powder layer.

14. A fabricating system comprising:
a fabricating apparatus to:
fabricate a fabrication object in a first fabricating process; and
fabricate a sacrificial fabrication object above the fabrication object in a lamination direction in a second fabricating process; and
a dryer to dry the fabrication object and the sacrificial fabrication object.

15. A non-transitory recording medium storing multiple instructions which, when executed by one or more processors, causes the one or more processors to perform a method, comprising
causing a fabrication data generating apparatus to generate fabrication data to perform the fabricating method according to any one of claims 1 to 15 to fabricate the fabrication object and the sacrificial fabrication object.
